# EUROPÄISCHE PATENTSCHRIFT

(11) **EP 2 198 979 B1**
(45) Veröffentlichungstag und Bekanntmachung des Hinweises auf die Patenterteilung: **29.02.2012**
(21) Anmeldenummer: 09177014.9
(22) Anmeldetag: 25.11.2009
(51) Int. Cl.: B05D 1/00, B05D 7/22, F28F 19/02

(54) **Beschichtungsverfahren und Beschichtungsvorrichtung zum Herstellen eines Bauteils sowie Wärmetauscher und Verwendung des Wärmetauschers**
Coating method and device for producing a component and heat exchanger and use of the heat exchanger
Procédé de revêtement et dispositif de revêtement destinés à la fabrication d'un composant, ainsi qu'échangeur thermique et utilisation de l'échangeur thermique

(30) Priorität: 18.12.2008 DE 102008062705
(43) Veröffentlichungstag der Anmeldung: 23.06.2010
(73) Patentinhaber: Behr GmbH & Co. KG, 70469 Stuttgart (DE)
(72) Erfinder: Trautwein, Ingo, 74321 Bietigheim-Bissingen (DE); Groß, Dieter, 70176 Stuttgart (DE); Gorges, Roger, 70193 Stuttgart (DE)

(56) Entgegenhaltungen:
- EP-A1- 0 780 163
- DE-A1- 3 319 544
- DE-A1- 19 548 594
- FR-A1- 2 888 309
- GB-A- 2 428 604
- US-A1- 2008 175 980

## Beschreibung

Die Erfindung betrifft ein Beschichtungsverfahren zum Herstellen eines Bauteiles, welches Bauteil mindestens eine Innenfläche aufweist, die für eine Beschichtung vorgesehen ist, aufweisend die Schritte: Bereitstellen des Bauteiles mit der Fläche und Beschichten der Fläche durch Beaufschlagen wenigstens der Fläche mit einem das Material der Beschichtung bildenden und/oder das Material der Beschichtung enthaltenden Beschichtungs-Fluid unter Bildung der Beschichtung. Weiterhin beschrieben, aber nicht Teil der Erfindung ist eine Beschichtungsanordnung zum Herstellen des Bauteils, welches Bauteil mindestens eine Fläche aufweist, die für eine Beschichtung vorgesehen ist, aufweisend: eine Vorrichtung zum Beschichten der Fläche durch Beaufschlagen wenigstens der Fläche mit einem das Material der Beschichtung bildenden und/oder das Material der Beschichtung enthaltenden Beschichtungs-Fluid unter Bildung der Beschichtung. Durch ein erfindungs gemänes Verfahren sind beschichtete Wärmetauscher zugänglich.

Für Brennkraftmaschinen wie z.B. einem Otto-Motor oder einem Dieselmotor od.dgl. ist häufig ein Aufladesystem vorgesehen, mit dem ein Ladefluid - beispielsweise ein Abgas, oder eine Ladeluft oder ein Abgasladeluftgemisch od.dgl. Gase oder Gasgemische - der Brennkraftmaschine in kombinierter Form im Betrieb zugeführt wird. Dies führt nicht nur zur einer Leistungssteigerung, sondern auch zur Senkung des Kraftstoffverbrauchs und zur Senkung einer Schadstoffemission der Brennkraftmaschine. Um solche und andere Betriebsparameter der Brennkraftmaschine zu optimieren, ist es regelmäßig erforderlich, das durch die Verdichtung im Aufladesystem erhitzte Ladefluid unter möglichst geringem Druckverlust zu kühlen.

Zur Kühlung eines Ladefluids dient regelmäßig ein Ladefluid-Wärmetauscher, bei dem das Ladefluid auf Temperaturen unterhalb des Taupunktes abgekühlt werden kann. Auch für andere Anwendungen von Wärmetauschern erfolgt regelmäßig eine starke Kühlung des zu kühlenden Fluids. Dies führt regelmäßig zum Anfallen von Ladefluidkondensaten, welche vergleichsweise aggressive chemische Eigenschaften haben können, insbesondere korrosiv auf das Material des Wärmetauschers einwirken können. Beispielsweise ist dies bei Abgaskühlem der Fall, deren Materialoberflächen größtenteils aggressiven, insbesondere korrosiv wirkenden Fluidkondensaten ausgesetzt sind.

Wärmetauscher, insbesondere Ladefluid-Wärmetauscher, können deshalb an anfälligen Flächen oder Oberflächen mit einer Schutzschicht, insbesondere einer Korrosionsschutzschicht versehen sein. Dies betrifft Flächen an Innenräumen, insbesondere Flächen bei im Betrieb mit Fluid beladenen Räumen des Wärmetauschers.

Des Weiteren kann eine Schutzschicht auch zur Vermeidung von übermäßiger Anhaftung von Partikeln aus den gekühlten Fluiden - im Falle eines Ladefluids in Form von Abgas z.B. Ruß - dienen. Eine auch als Versottung bekannte Belegung der Wärmetauscherflächen, kann zu einer Verschlechterung des Wärmeübergangs und damit zu einem erhöhten Druckabfall im Wärmetauscher führen.

Aus dem Stand der Technik sind eine Vielzahl von Beschichtungsarten und Beschichtungsverfahren bekannt.

Beispielsweise ist aus KR20040063 241 ein Verfahren zur Innenbeschichtung von Wärmetauscherrohren mittels eines durch ein Rohr hindurchzuziehenden Molches bekannt, mit dem ein Beschichtungsharz auf der Innenseite des Rohres appliziert werden kann. Aus JP63148095 ist bekannt, einen Wärmetauscher mit einer Sprühlackierung zu versehen. Aus DE 10 2005 061 197 A1 ist bekannt, einen Abgaswärmetauscher mit einer Innenbeschichtung zu versehen, um eine Versottung des Abgaswärmetauschers zu vermindern. Aus DE 1 012 438 A1 ist bekannt, einen Abgaswärmetauscher mit einer SiO₂-Glasfilm-Beschichtung zu versehen, indem der Wärmetauscher mit einer SiO₂-Behandlungslösung unter Anwendung von Vakuum beaufschlagt wird. Aus DE 32 28 617 A1 ist bekannt, eine Innenbeschichtung von Rohren eines Wärmetauschers in Form einer durchgehenden Kunststofffolie vorzusehen.

An anderer Stelle sind nickelbasierte Beschichtungen wie aus G 911 20 878.6 oder zinkbasierte Schichten offenbart, welche insbesondere im Rahmen eines Hartlötprozesses aktiviert werden können - so beispielsweise beschrieben in DE 196 17 169 C2 oder WO 2003100337 A2. Aus EP 1 817 537 B1 ist bekannt, eine hartlötresistente Beschichtung zu applizieren. Andere Möglichkeiten des Aufbringens einer Hartlötschicht sind beispielsweise in DE 690 33 556 T2 oder EP 1 906 131 A2 offenbart.

In DE 10 2004 025 621 A1 ist offenbart, eine Beschichtung mittels eines separaten Tiefziehteils aus Metall oder Reinaluminium zu applizieren - die Schicht kann vorher beispielsweise als Schicht auf einem Modell zur Verfügung gestellt werden.

Aus Anmeldungen wie WO 2006/138394 A2 oder DE 10 2005 043 730 A1 ist es bekannt, einen Wärmetauscher mit einem Beschichtungsfluid zu beaufschlagen, um eine auf Nanotechnologie basierende Beschichtung zur Verfügung zu stellen. Eine solche Beschichtung kann beispielsweise im Rahmen eines Sol-Gel-Prozesses zur Bildung einer Polymerschicht aufgebracht werden. Wie in DE 10 2005 043 730 A1 beschrieben, kann ein entsprechender Wärmetauscher geflutet, anschließend geleert und unmittelbar danach getrocknet werden. In DE 101 24 383 A1 ist ein Verfahren zur Beschichtung eines Wärmetauschers mit einer SiO₂-Schicht beschrieben, bei welchem der Wärmetauscher in die Behandlungslösung von SiO₂ eingetaucht wird oder bespritzt wird und unmittelbar anschließend getrocknet wird.

Grundsätzlich eignen sich insbesondere die zuletzt genannten Beschichtungsverfahren dazu eine vorteilhafte Beschichtung bei einem Wärmetauscher zur Verfügung zu stellen und damit nicht nur einem Angriff der Wärmetauscheroberfläche durch aggressive, insbesondere korrosive Medien im Betrieb entgegenzuwirken, sondern darüber hinaus Konstruktionsmaterialien für einen solchen Wärmetauscher einfacher bzw. kostengünstiger zu gestalten. So kann beispielsweise bei wirksamen Schutzschichten Aluminium anstelle von Edelstahl als Wärmetauschermaterial zum Einsatz kommen. Weiter sind von solchen Materialvereinfachungen Gewichts- und Kostenersparnisse zu erwarten. Die zuvor genannten Herstellungsverfahren erweisen sich als noch nicht ausreichend zuverlässig. Wünschenswert ist es vor allem, eine Schutzschicht aufbringen zu können, welche hinsichtlich ihrer Eigenschaften besonders zuverlässig ausgebildet ist. Insbesondere sollte es sich um gleichförmige, und/oder fehlerfreie und/oder geschlossene Beschichtungen handeln.

Ein verbessertes Beschichtungsverfahren ist beispielsweise in EP 0 780 162 A1 beschreiben, bei welchem ein Wärmetauscher an seiner inneren Oberfläche mit einer Lackierung versehen wird, wobei die Schichtdicke der Lackierung auf der beschichteten Oberfläche im Wesentlichen gleichmäßig und die innere Oberfläche frei von durch Lack verstopften Zwischenräumen ist. Durch Zentrifugieren des frisch lackierten Wärmetauschers in einer Schleuder wird eine Vergleichmäßigung der Schicht erreicht. Das Lackieren des Wärmetauschers kann durch Tauchen desselben erfolgen. Eine gewünschte schichtdicke kann als Funktion der Zentrifugalkraft, der Schleuderdauer und der Viskosität des Lacks eingestellt werden. Auch ein solches kontrolliertes Verfahren ist im Hinblick auf die Schichtqualität noch verbesserungswürdig.

An dieser Stelle setzt die Erfindung an, deren Aufgabe es ist, ein Verfahren gemäß Anspruch 1 anzugeben, mit welchem eine Beschichtung, insbesondere eine Schutzschicht vergleichsweise einfach und mit verbesserten Eigenschaften auf einem Bauteil, insbesondere einem Bauteil einer Fluidführung, aufbringbar ist. Insbesondere soll die Schutzschicht als eine Korrosionsschutzschicht und/oder Versottungsschutzschicht dienen. Die Aufgabe soll insbesondere im Hinblick auf eine Herstellung eines Wärmetauschers und/oder eines Bauteils in der umgebenden Fluidführung eines Wärmetauschers gelöst werden. Insbesondere soll die Aufgabe im Hinblick auf eine Innenfläche des Bauteils vorteilhaft gelöst werden.

Die Aufgabe wird hinsichtlich des Verfahrens durch ein Beschichtungsverfahren der eingangs genannten Art gelöst, bei dem erfindungsgemäß die weiteren Schritte vorgesehen sind:
- Homogenisieren der Beschichtung durch kontrolliertes Bewegen des Bauteils;
- Trocknen des Bauteils bei erhöhter Temperatur,
wobei zum Beschichten der Fläche ein Innenraum des Bauteils, insbesondere ein im Betrieb mit Betriebsfluid zu beaufschlagender Raum des Bauteils beaufschlagt wird, wobei insbesondere zum Beschichten eine Beströmungsrichtung umgekehrt wird.

Unter erhöhter Temperatur ist vorliegend insbesondere eine Temperatur über Raumtemperatur, vorzugsweise eine Temperatur gemeint, die zum beschleunigten Trocknen der aufgebrachten Beschichtung geeignet ist. Insbesondere handelt es sich um eine Temperatur, die zum Aushärten und/oder Einbrennen der Beschichtung geeignet ist.

Darüber hinaus hat es sich als besonders vorteilhaft erwiesen, dass die zu beschichtende Fläche mit dem Beschichtungs-Fluid unter Bildung der Beschichtung beströmt wird. Die kontrollierte Bewegung ist insbesondere eine kontrollierte Drehbewegung

Die Erfindung geht von der Überlegung aus, dass im Stand der Technik zwar Maßnahmen bekannt sind, welche eine Beschichtung vergleichmäßigen sollen, diese jedoch gleichwohl unzureichend sind. Wie von der vorliegenden Erfindung erkannt, ist ein Verfahren zu definieren, welches ein Homogenisieren der Beschichtung durch kontrolliertes Bewegen des Bauteils und ein Trocknen des Bauteiles bei erhöhter Temperatur aufeinander abstimmen. Die Erfindung hat erkannt, dass nach dem Beschichten der Fläche durch Beaufschlagen, insbesondere Beströmen der Fläche, ein Homogenisieren und Trocknen des Bauteiles in aufeinander abgestimmter Weise zu erfolgen hat.

Hinsichtlich der Vorrichtung wird eine Beschichtungsanordnung verwendet welche neben der Beschichtungsvorrichtung zudem aufweist:
- eine Vorrichtung zum Homogenisieren der Beschichtung durch kontrolliertes Bewegen des Bauteiles;
- eine Vorrichtung zum Trocknen des Bauteiles bei erhöhter Temperatur.

Die Vorrichtung zum Beschichten der Fläche ist insbesondere als eine Beströmungsvorrichtung ausgelegt. Die Vorrichtung zum Homogenisieren der Beschichtung ist insbesondere als eine Drehbewegungsvorrichtung ausgelegt.

Insgesamt verhindert das Konzept der Erfindung, dass bei einem Bauteil das Besichtungsmaterial während oder nach dem Beschichtungsvorgang, unkontrolliert ausläuft. Vielmehr wird eine Homogenisierung und gleichmäßige Trocknung der Beschichtung auf dem Bauteil in abgestimmter Weise erreicht. Dadurch wird letztendlich eine besonders gute Qualität der Beschichtung, insbesondere eine gleichmäßige und/oder fehlerfreie und/oder geschlossen Beschichtung erhalten. Insbesondere wird gemäß dem Konzept der Erfindung vermieden, dass sich ungleichmäßige Schichtdicken bilden oder Schichteinschlüsse wie z.B. Luftblasen auftreten; unbeschichtete Stellen auf dem Bauteil werden weitgehend vermieden. Diese Vorteile werden selbst bei vergleichsweise komplizierten dreidimensionalen Strukturen, wie beispielsweise mit Strömungsleitelementen versehene Innenflächen von Wärmetauscherrohren od.dgl. erreicht.

Solche Ergebnisse können mit bisher bekannten Beschichtungsverfahren, welche nur einen Homogenisierungsschritt oder nur einen Trocknungsschritt vorsehen bislang nicht erreicht werden.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Es hat sich als besonders vorteilhaft erwiesen, dass zum Beschichten der Fläche das gesamte Bauteil mit Beschichtungs-Fluid beaufschlagt wird. Je nach Zweckmäßigkeit kann es sich auch als vorteilhaft erweisen zum Beschichten der Fläche, wenigstens einen Innenraum des Bauteiles mit Beschichtungs-Fluid zu beaufschlagen. Insbesondere kann je nach Bedarf auch vorgesehen sein lediglich einen im Betrieb mit Betriebs-Fluid zu beaufschlagenden Raum des Bauteiles mit Beschichtungs-Fluid zu beaufschlagen, insbesondere zu beströmen.

Ein besonders gutes Beschichtungsergebnis hat sich ergeben im Rahmen eines Beschichtungsschrittes, bei dem eine Beströmungsrichtung umgekehrt wird und/oder ein Beschichtungs-Fluid angesaugt wird. Dadurch lassen sich Unterschiede wie sie durch räumlich unterschiedliche Abreaktion von Reaktivkomponenten im Beschichtungs-Fluid entstehen können ausgleichen.

Generell erlaubt das Konzept der Erfindung auch eine andere Art von Beaufschlagung des Bauteiles, beispielsweise durch Tauchen, Sprühspritzen oder CVD-Beschichten des Bauteiles.

Grundsätzlich kann ein Beschichtungs-Fluid in vielfältiger Form gebildet sein, beispielsweise in Form eines Harzes, eines Lackes oder eines SiOₓ bildenden Materials. Möglich sind auch metallische Beschichtungen bildende Beschichtungs-Fluide, wie beispielsweise ein Beschichtungs-Fluid enthaltend Material in Form eines Zink- oder Nickel- bildenden Materials.

Daneben hat sich, insbesondere zur Bildung einer Korrosionsschutzschicht und/oder Versottungsschutzschicht im Rahmen des vorliegenden Konzepts der Erfindung ein Beschichtungs-Fluid in Form eines Epoxidharzes als vorteilhaft erwiesen. Als besonders vorteilhaft hat sich ein Epoxidharz erwiesen, welches mit PTFE-Partikeln (Polytetrafluorethylen-Partikeln) beladen ist.

Zum Homogenisieren haben sich insbesondere Drehbewegungen als vor teilhaft erwiesen. Insbesondere lässt sich eine Beschichtung im Rahmen des Konzepts der vorliegenden Erfindung durch Schleudern des Bauteiles vorteilhaft erreichen. Generell kann die Kontrolle der Bewegung derart ausgelegt sein, dass eine möglichst geringe Schichtdicke erzielt wird, welche gleichwohl noch gleichmäßig und geschlossen ist. Besonders vorteilhaft kann dazu die Drehzahl und/oder die Drehzeit, insbesondere in Abstimmung auf das verwendete Beschichtungs-Fluid, kontrolliert werden.

Es hat sich gezeigt, dass besonders gute Ergebnisse beim Homogenisieren mit Drehbewegungen im Bereich einer Umdrehungszahl von 100-300 U/min, insbesondere im Bereich einer Umdrehungszahl von 120-200 U/min erreicht werden. Zum Homogenisieren sind besonders vorteilhafte Ergebnisse beim Durchführen von Drehbewegungen für einen Zeitraum von 10sec-10min, insbesondere für einen Zeitraum von 20sec-60sec, erzielt worden. Die Abstimmung von Drehzahl und Drehzeit lässt sich je nach Zweckmäßigkeit und unter Kontrolle der Schichtdicke auslegen.

Zum Trocknen kann im Rahmen des vorgeschlagenen Verfahrens vorteilhaft eine Temperatur auf eine Temperatur zwischen 150°C-300°C erhöht werden. Dies betrifft insbesondere eine Haltetemperatur. Je nach Zweckmäßigkeit kann ein dynamischer Temperaturverlauf zwischen einer Mindesttemperatur und einer Haltetemperatur angestrebt werden.

Insgesamt kann eine erhöhte Temperatur, insbesondere eine Haltetemperatur, für einen Zeitraum von 10min-60min, insbesondere für einen Zeitraum von 20min-40min im Rahmen eines Trocknungsschrittes aufrechterhalten werden.

Ähnlich wie beim Homogenisieren kann auch zum Trocknen ein Bewegen des Bauteils vorteilhaft sein, insbesondere ein Drehbewegen des Bauteiles. Insgesamt kann eine Drehfrequenz des Bauteils zum Trocknen unterhalb einer Drehfrequenz des Bauteils zum Homogenisieren liegen, vorteilhaft bei einer Umdrehungszahl des Bauteils von 5-100 U/min, insbesondere bei einer Umdrehungszahl von 20-40 U/min.

Umdrehungszahl und/oder Bewegungszeit für Homogenisieren und Trocknen sind vorteilhaft gut aufeinander abgestimmt.

Zum Homogenisieren und/oder Trocknen kann das Bauteil vorteilhaft um eine Achse oder in Achsrichtung des Bauteiles gedreht werden. So lassen sich vor allem bei rotationssymmetrischen Bauteilen Drehbewegungen um eine Achse des Bauteils mit Vorteil realisieren. Bei komplexeren dreidimensionalen Strukturen, wie beispielsweise einem kompletten Wärmetauscher haben sich Drehbewegungen in Achsrichtung des Bauteils als vorteilhaft erwiesen. Insgesamt hat es sich als zweckmäßig erwiesen, dass Öffnungen des Bauteils in radialer Richtung nach außen zeigen. Dadurch lässt sich vorteilhaft ein Austragen des Beschichtungs-Fluids mit der Zentrifugalkraft steuern.

Im Rahmen einer besonders bevorzugten Weiterbildung der Erfindung ist vorgesehen, dass das Bauteil zum Trocknen und/oder Homogenisieren in einer geschwenkten Stellung gehalten wird, dies im Unterschied zu einer horizontal ausgerichteten Stellung des Bauteiles, bei welcher die Achse des Bauteils in Horizontallage wäre. Insbesondere kann auch eine Schwenkbewegung des Bauteiles, beispielsweise in Form einer Hin- und Herbewegung zwischen Horizontallage und Schwenkstellung, erfolgen. Die Schwenkstellung bzw. Schwenkbewegung kann vorzugsweise in Richtung eines im Betrieb mit Betriebs-Fluid zu beaufschlagenden Raumes des Bauteiles erfolgen. Mit anderen Worten, es kann eine Schwenkstellung und/oder Schwenkbewegung in Kombination mit einer Drehbewegung des Bauteils ein kontrolliertes Auslaufen des Beschichtungs-Fluids unter Erhalt einer vergleichsweise gleichmäßigen und vollständig das Bauteil bedeckenden und dennoch ausreichend dünnen Schicht erreicht werden. Solche Vorteile werden insbesondere im Rahmen des Homogenisierungsschrittes für die Beschichtung erzielt. Im Rahmen eines Trocknungsschrittes können solche Maßnahmen vorteilhaft ein Zusammenlaufen des Beschichtungsmaterials unter Wärmeeinfluss und damit unbedeckte Stellen der zu beschichtenden Fläche verhindern.

Das Konzept der Erfindung führt auch auf einen mit dem Beschichtungsver fahren und/oder der Beschichtungsvorrichtung gemäß dem Konzept der Erfindung hergestellten Wärmetauscher. Ein Wärmetauscher ist zum Wärmetausch zwischen einem ersten Fluid einerseits und einem zweiten Fluid andererseits ausgelegt. Besonders vorteilhaft eignet sich ein gemäß dem Verfahren und/oder der Vorrichtung hergestellter Wärmetauscher zum Wärmetausch zwischen einem Abgas- und/oder einer Ladeluft einerseits und einem Kühlmittel andererseits.

Ein Wärmetauscher weist insbesondere einen Block zur voneinander getrennten wärmetauschenden Führung des ersten und zweiten Fluids auf, welcher Block eine Anzahl von dem ersten Fluid druchströmbaren Strömungskanäle hat und eine erste die Strömungskanäle aufnehmende von dem zweiten Fluid durchströmbare Kammer. Ein Gehäuse des Wärmetauschers nimmt vorteilhaft die Kammer und die Strömungskanäle auf.

Vorteilhaft ist, dass zum Homogenisieren und/oder zum Trocknen ein kontrolliertes Bewegen des Bauteiles, insbesondere ein Drehbewegen des Bauteiles, in einer geschwenkten Stellung des Bauteiles, insbesondere mit einer Schwenkbewegung des Bauteiles, vorzugsweise in Richtung eines im Betrieb mit Betriebsfluid zu beaufschlagenden Raum des Bauteiles erfolgt.

Vorteilhaft ist die Beschichtungsanordnung zum Herstellen eines Bauteiles, insbesondere einer Fluidführung, insbesondere zum Herstellen eines Wärmetauschers und/oder eines Bauteiles in der umgebenden Fluidführung eines Wärmetauschers, welches Bauteil mindestens eine Fläche aufweist, insbesondere eine Innenfläche, die für eine Beschichtung vorgesehen ist, aufweisend die Schritte:
- eine Vorrichtung zum Beschichten der Fläche durch Beaufschlagen, insbesondere Beströmen, wenigstens der Fläche mit einem das Material der Beschichtung bildenden und/oder das Material der Beschichtung enthaltenden Beschichtungs-Fluid unter Bildung der Beschichtung;
- eine Vorrichtung zum Homogenisieren der Beschichtung durch kontrolliert tes Bewegen, insbesondere Drehbewegen, des Bauteiles;
- eine Vorrichtung zum Trocknen des Bauteiles bei erhöhter Temperatur.

Vorteilhaft ist ein Wärmetauscher hergestellt mit einem Beschichtungsverfahren und/oder in einer Beschichtungsanordnung, zum Wärmetausch zwischen einem ersten Fluid einerseits, insbesondere einem Abgas und/oder einer Ladeluft und einem zweiten Fluid andererseits, insbesondere einem Kühlmittel.

Vorteilhaft ist ein Wärmetauscher aufweisend:
einen Block zur voneinander getrennten und wärmetauschenden Führung des ersten und des zweiten Fluids, mit
einer Anzahl von dem ersten Fluid durchströmbaren Strömungskanälen, eine erste die Strömungskanäle aufnehmende, von dem zweiten Fluid durchströmbare Kammer
ein Gehäuse, in dem die Kammer und die Strömungskanäle angeordnet sind.

Vorteilhaft ist die Verwendung des Wärmetauschers als Hochtemperatur- oder Niedertemperatur-Wärmetauscher.

Vorteilhaft ist die Verwendung des Wärmetauschers, insbesondere eines Abgas-Wärmetauschers, als Abgaskühler zur Abgaskühlung in einem Abgasrückführsystem einer Brennkraftmaschine eines Kraftfahrzeugs.

Vorteilhaft ist die Verwendung des Wärmetauschers, insbesondere eines Abgas-Wärmetauschers, als Zuheizer zur Innenraumerwärmung eines Kraftfahrzeugs.

Vorteilhaft ist die Verwendung des Wärmetauschers als Ladeluftkühler zur direkten oder indirekten Kühlung von Ladeluft in einem Ladeluftzuführsystem für eine Brennkraftmaschine eines Kraftfahrzeugs.

Vorteilhaft ist die Verwendung des Wärmetauschers als Ölkühler, insbesondere zur Kühlung von Motoröl und/oder Getriebeöl.

Vorteilhaft ist die Verwendung des Wärmetauschers als Kälte- oder Kühlmittelkühler und/oder Kälte- oder Kühlmittelkondensator in einem Kälte- oder Kühlmittelkreislauf einer Klimaanlage eines Kraftfahrzeugs.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Im Einzelnen zeigt die Zeichnung eine besonders bevorzugte Ausführungsform einer Beschichtungsanordnung gemäß dem Konzept der Erfindung, wobei dazu zeigt:
- Fig. 1:: eine Vorrichtung zum Beschichten eines Wärmetauschers durch Be- strömen eines Innenraums des Wärmetauschers mit einem Be- schichtungsmaterial enthaltenden Beschichtungs-Fluid;
- Fig. 2.: eine bevorzugte Vorrichtung zum Homogenisieren der Beschichtung in Form einer als Schleuder für das Bauteil;
- Fig. 3:: eine bevorzugte Vorrichtung zum Trocknen des Wärmetauschers bei erhöhter Temperatur in Form eines Ofens.

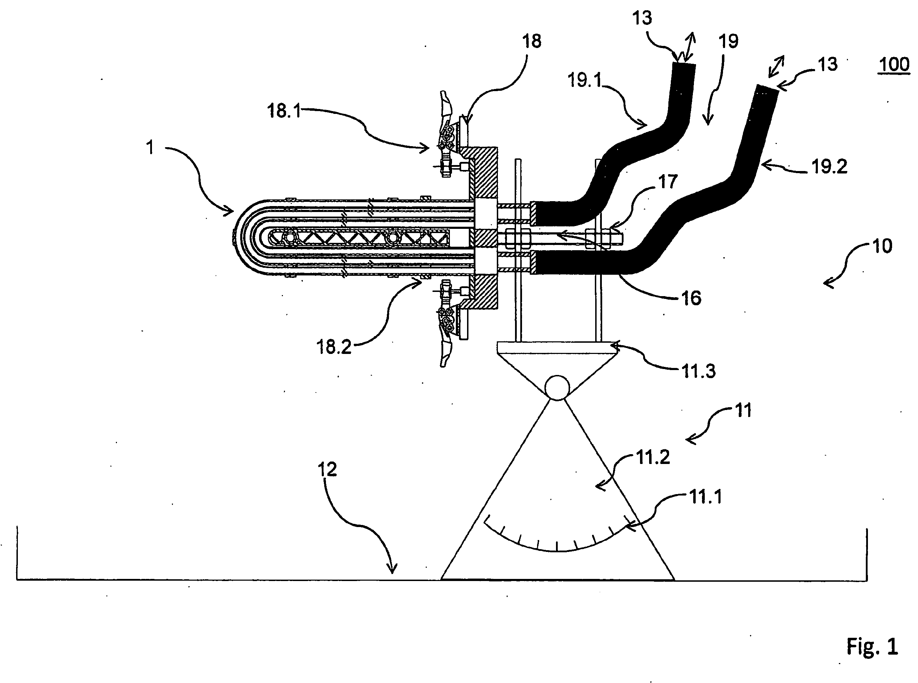

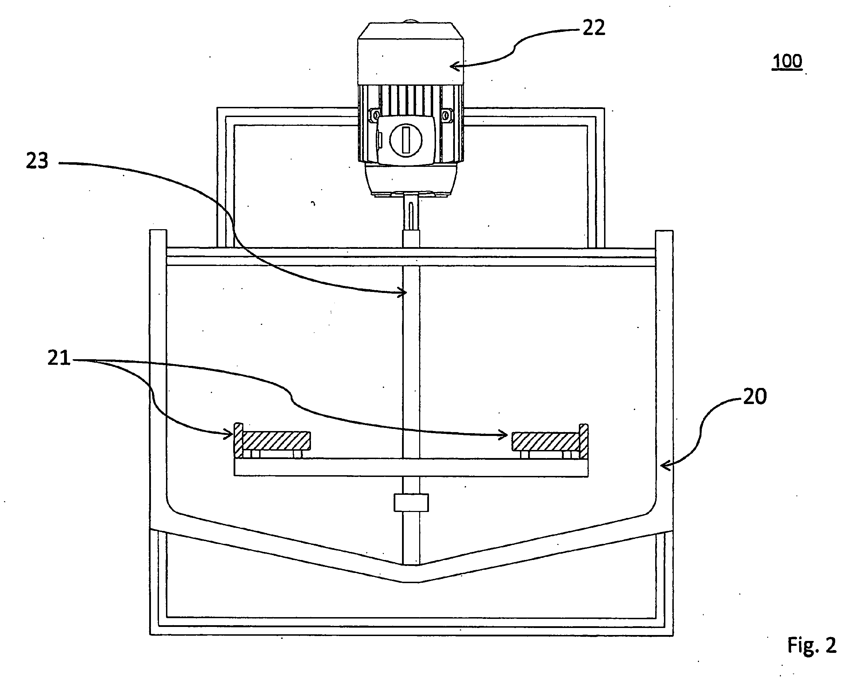

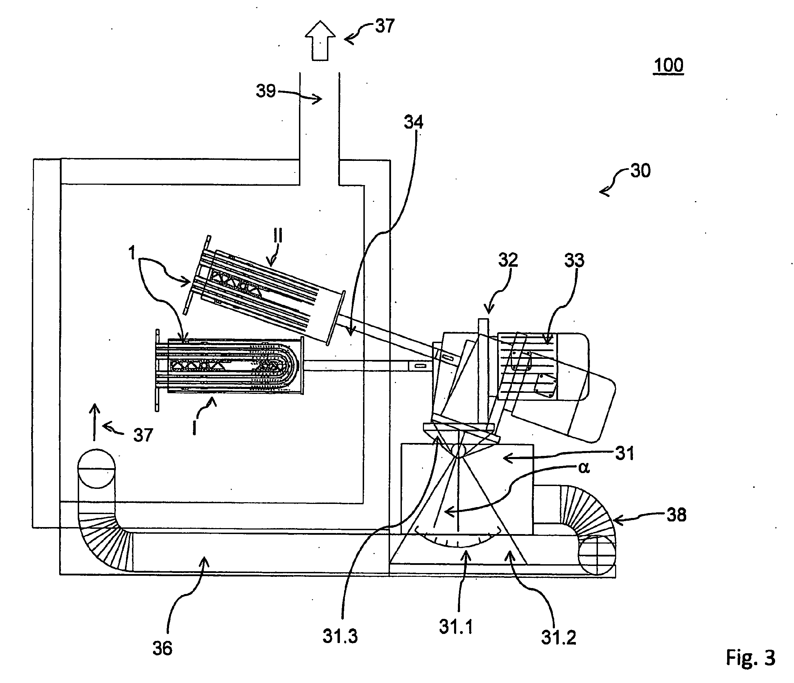

Die in Fig. 1 bis Fig. 3 insgesamt erläuterte Beschichtungsanordnung 100 weist dem Konzept der Erfindung folgend eine Vorrichtung 10 zum Beschichten einer Fläche durch Beströmen der Fläche unter Bildung der Beschichtung auf. Weiter weist die Beschichtungsanordnung 100 eine in Fig. 2 gezeigte Vorrichtung zum Homogenisieren der Beschichtung durch kontrolliertes Bewegen, vorliegend Schleudern, des Bauteiles auf. Darüber hinaus weist die Beschichtungsanordnung 100 eine in Fig. 3 näher dargestellte Vorrichtung 30 zum Trocknen des Bauteiles bei erhöhter Temperatur auf, welche vorliegend im Wesentlichen als ein Ofen gebildet ist. Die Beschichtungsanordnung 100 ist im Rahmen der vorliegenden Ausführungsform als eine Beschichtungsanordnung zur Beschichtung eines Wärmetauschers 1 ausgelegt, wobei die zu beschichtende Fläche in Form einer Innenfläche des Wärmetauschers 1 gebildet ist, die bei betriebsgemäßen Einsatz mit einem Ladefluid in direktem Strömungskontakt steht und damit einer besonders hohen Korrosions und/oder Versottungstendenz ausgesetzt ist.

Die Beschichtungsvorrichtung 10 der Fig. 1 weist vorliegend eine Schwenkkonsole 11 mit einem Sockel 11.2 und Schwenkkopf 11.3 auf, welcher in einem voreingestellten Winkel 11.1 geschwenkt werden kann. Am Schwenkkopf 11.3 ist eine Haltevorrichtung 15 angebracht, welche einen Haltestab 16 mit einer Arretierung 17 zur Befestigung des Haltestabs 16 an der Haltevorrichtung 15 aufweist. An dem Haltestab 16 ist eine Anschlussplatte 18 angebracht, welche einseits zum Anschluss einer Beströmungsleitung 19 mit einer Einlassleitung 19.1 und einer Auslassleitung 19.2 für Beschichtungs-Fluid dient. Anderseits ist an der Anschlussplatte 18 ein Wärmetauscher 1 als zu beschichtendes Bauteil unter Anschluss an die Beströmungsleitung 19 anbringbar. Dazu dienen entsprechende Spannvorrichtungen 18.1 und 18.2, welche teilweise an der Anschlussplatte 18 angebracht sind.

Zur Sicherung von gegebenenfalls auslaufendem Beschichtungs-Fluid und sonstigen Verfahrensrückständen ist die Schwenkkonsole 11 zusammen mit der Beströmungsleitung 19 und der Halteplatte 18 sowie dem zu beschichtenden Wärmetauscher 1 so in einer Tropfwanne 12 angeordnet, dass gegebenenfalls auslautendes Beschichtungs-Fluid von der Tropfwanne 12 aufgefangen wird. Vorliegend ist das Beschichtungs-Fluid in Form eines mit PTFE-Partikeln angereicherten Epoxidharzes gebildet. Zur Durchführung des Verfahrens wird das Beschichtungs-Fluid 13 in die Einlassleitung 19.1 der Beströmungsleitung 19 eingeführt, durch den Innenraum des Wärmetauschers 1 hindurchgeführt und über die Austassleitung 19.2 der Beströmungsleitung 19 wieder abgeführt.

Auf diese Weise wird der gesamte im Betriebszustand dem vergleichsweise aggressiven Ladefluid ausgesetzte Innenraum des Wärmetauschers 1, d.h. insbesondere die Ladefluid führenden Kanäle des Wärmetauschers 1 mit Beschichtungsfluid geflutet. Gegebenenfalls kann die Flutrichtung, d.h. Beströmungsrichtung, umgekehrt werden. Dies ist durch die Doppelpfeile des Bezugszeichens 13 für das Beschichtungs-Fluid angedeutet. D.h. die Einlassleitung 19.1 kann auch als Auslassleitung genutzt werden, während die bis dahin vorgesehene Auslassleitung 19.2 dann als Einlassleitung genutzt wird. Dadurch kann eine übermäßige Abreaktion des Beschichtungs-Fluid im Eingangsbereich des Wärmetauschers 1 und die fallende Tendenz einer Beschichtung kompensiert werden; nämlich indem durch Umkehrung der Beströmung nunmehr die übermäßige Abreaktion des Beschichtungs-Fluid in den Ausgangsbereich des Wärmetauschers 1 verlegt wird, dies mit abfallender Tendenz zum Eingangsbereich des Wärmetauschers 1 hin. Insgesamt kann dadurch ein vergleichsweise gleichmäßiges Beschichtungsverhalten über den gesamten Beschichtungsweg im Wärmetauscher 1 erzielt werden. Darüber hinaus kann der Wärmetauscher 1 im Beschichtungsbereich auch mit Ultraschall beaufschlagt werden, was eine vergleichsweise gleichmäßige und gute Applikation einer Beschichtung ohne Fehlstellen fördert. Insbesondere kann eine Ultraschallbeaufschlagung dazu dienen, auch vergleichsweise enge dreidimensionale Strukturen dünn zu beschichten, ohne dass sich Verstopfungen oder ungewünschte Verengungen, z.B. durch übermäßige Adhäsion oder Oberflächenhaftung des Beschichtungs-Fluids, ergeben.

Fig. 2 zeigt im Rahmen einer Beschichtungsanordnung 100 eine in einem Sicherheitskäfig 20 angebrachte Vorrichtung zum Homogenisieren der Beschichtung in Form einer Schleuder. Die Schleuder weist einen an einem Gestell angebrachten Drehmotor, insbesondere Elektromotor 22 auf, der über eine Achse 24 einen Propeller 25 antreibt, an welchem in Propellerachse der Wärmetauscher 1 in Achsrichtung anbringbar ist. Unter Antrieb des Propellers wird so das in den Wärmetauscher 1 eingebrachte Beschichtungsmaterial kontrolliert unter Wirkung der Zentrifugalkraft auslaufen. Eine präzise Einstellung der Schichtdicke über eine vorliegend eingestellte Schleuderdrehzahl zwischen 120 und 220 U/min bei einer Schleuderzeit von 20 bis 60 sec. führt zu einer vorliegend vergleichsweise dicken Schicht. Mit dem vorgeschlagenen Beschichtungsverfahren lässt sich problemlos eine Schichtdicke bis hinunter zu 5 µm erreichen. Dazu kann die Drehzahl und die Drehzeit - vorteilhaft auch für andere Bauteile - höher eingestellt werden. Für dickere Schichten wird Drehzahl und Drehzeit vergleichsweise niedrig eingestellt.

Je nach angestrebter Schichtdicke erfolgt in einem weiteren Verfahrensschritt ein Trocknen des Wärmetauschers 1 in einer als Ofen ausgebildeten Vorrichtung 30, welche in Fig. 3 gezeigt ist. Die Vorrichtung 30 weist dazu eine Schwenkkonsole 31 mit einem Sockel 31.2 und einem Schwenkkopf 31.3 auf - der Schwenkkopf ist in einem bestimmten Winkel 31.1 schwenkbar. Auf dem Schwenkkopf 31.3 ist eine Halteplatte 32 angebracht, die einseits einen Motor 33 und anderseits eine durch den Motor antreibbare Welle 34 zum Halten des Wärmetauschers 1 trägt. Fig. 3 zeigt vorliegend die Vorrichtung 30 zum Trocknen mit der Schwenkkonsole 31 in einer ersten horizontalen Position I und einer schattiert dargestellten zweiten geschwenkten Position II. Im letzteren Fall ist der Wärmetauscher 1 um einen Winkel α derart geschwenkt, dass das Beschichtungs-Fluid in Richtung eines vom Betriebsfluid zu beaufschlagenden Raum des Wärmetauschers 1 zurückfließt. Der Wärmetauscher 1 befindet sich sowohl in horizontaler Stellung I als auch in Schwenkstellung II in einem Ofen 35 der Vorrichtung 30 zum Trocknen. Dem Ofen kann Heißluft über eine Heizungsleitung 36 zugeführt werden, welche Heißluft 37 in einem Lufterhitzer 38 erhitzt wurde. Über einen Abluftschacht 39 kann die Heißluft 37 aus dem Ofen nach oben abgeführt werden.

Durch Drehen des Wärmetauschers 1 mittels der durch den Motor 33 angetriebenen Achse 34 und angemessenem Schwenkbewegen des Wärmetauschers 1 von der Stellung I in die Stellung II wird vorliegend insbesondere ein Zusammenlaufen des Beschichtungsmaterials unter Wärmeeinfluss im Ofen 35 vermieden. Vielmehr wird auch im Trocknungsschritt - wie beim Homogenisierungsschritt - durch Bewegen des Wärmetauschers 1 eine besonders vorteilhafte, gleichmäßige und geschlossene, fehlerfreie Beschichtung des Wärmetauschers 1 erreicht. Wie im vorliegenden Ausführungsbeispiel selbst, ist dies selbst dann gewährleistet, wenn vergleichsweise enge und komplexe dreidimensionale Innenstrukturen wie das Innere von Strömungskanälen des Wärmetauschers 1 od.dgl. beschichtet werden sollen.

Zusammenfassend gibt das Konzept der Erfindung ein Beschichtungsverfahren zum Herstellen eines Bauteils an, insbesondere zum Herstellen eines vorliegend beschriebenen Wärmetauschers 1 und/oder eines Bauteils in der umgebenden Fluidführung eines Wärmetauschers. Das Bauteil, vorliegend der Wärmetauscher 1, hat mindestens eine Fläche, vorliegend eine Innenfläche, die für eine Beschichtung vorgesehen ist. Das Beschichtungsverfahren weist folgende Schritte auf:
- Bereitstellen des Bauteils mit der Fläche;
- Beschichten der Fläche durch Beaufschlagen, insbesondere Beströmen, wenigstens der Fläche mit einem das Material der Beschichtung bildenden und/oder das Material der Beschichtung enthaltenden Beschichtungs-Fluid unter Bildung der Beschichtung, insbesondere mit einer Beschichtungsvorrichtung 10 der Beschichtungsanordnung 100;
- Homogenisieren der Beschichtung durch kontrolliertes Bewegen, insbesondere Drehbewegen des Bauteiles, insbesondere in einer Homogenisierungsvorrichtung der Beschichtungsanordnung 100;
- Trocknen des Bauteils bei erhöhter Temperatur, insbesondere in einer Trocknungsvorrichtung 30 der Beschichtungsanordnung 100.

Im Rahmen der vorliegend beschriebenen Ausführungsform hat sich zum Homogenisieren eine kontrollierte Drehbewegung mit Umdrehungen zwischen 120 und 200 U/min für eine Zeit zwischen 20 und 60 sec. als besonders vorteilhaft erwiesen. Ein Trocknen bei 150 bis 300°C mit einer auf den Homogenisierungsschritt abgestimmten Drehbewegung bei einer Umdrehungszahl von 20 bis 40 U/min und für eine Zeit von 20 bis 40 min führt zu einer besonders guten Beschichtung beim Wärmetauscher 1.

### Bezugszeichentiste

- 1: Wärmetauscher
- 3: Schwenkkopftreffpunkt
- 10: Beschichtungsvorrichtung
- 11,31: Schwenkkonsole
- 11.1,31.1: Winkel
- 11.2, 31.2: Sockel
- 11.3,31.3: Schwenkkopf
- 12: Tropfwanne
- 13: Beschichtungs-Fluid
- 15: Haltevorrichtung
- 16: Haltestab
- 17: Arretierung
- 18, 32: Anschlussplatte, Halteplatte
- 18.1, 18.2: Spannvorrichtungen
- 19: Beströmungsleitung
- 19.1: Einlassleitung
- 19.2: Auslassleitung
- 20: Sicherheitskäfig und Auffanggefäß
- 21: Wärmeübertrager
- 22: Elektromotor
- 23: Welle
- 24: Achse
- 25: Propeller
- 30: Trocknungsvorrichtung
- 33: Motor
- 34: Welle
- 35: Ofen
- 36: Heizungsleitung
- 37: Heißluft
- 38: Lufterhitzer
- 39: Abluftschacht

- 100: Beschichtungsanordnung

- I: horizontale Position
- II: geschwenkte Position

- α: Winkel

## Patentansprüche

1. Beschichtungsverfahren zum Herstellen einer Fluidführung eines Wärmetauschers (1), welche mindestens eine Innenfläche aufweist, die für eine Beschichtung vorgesehen ist, aufweisend die Schritte
- Bereitstellen des Bauteiles mit der Fläche
- Beschichten der Fläche durch Beströmen der Fläche mit einem das Material der Beschichtung bildenden und/oder das Material der Beschichtung enthaltenden Beschichtungs-Fluid (13) unter Bildung der BeSchichtung;
- Homogenisieren der Beschichtung durch kontrolliertes Bewegen, insbesondere Drehbewegen, des Bauteiles;
- Trocknen des Bauteiles bei erhöhter Temperatur, wobei zum Beschichten der Fläche ein Innenraum des Bauteiles, insbesondere ein im Betrieb mit Betriebsfluid zu beaufschlagender Raum des Bauteiles beaufschlagt wird, wobei insbesondere zum Beschichten eine Beströmüngsrichtung umgekehrt wird.

2. Beschichtungsverfahren nach Anspruch 1, **dadurch gekennzeichnet, dass** zum Beschichten ein Beschichtungsfluid (13) angesaugt wird.

3. Beschichtungsverfahren nach einem der Ansprüche 1 bis 2, **dadurch gekennzeichnet, dass** ein Beschichtungsfluid (13) in Form eines Harzes, Lackes, eines SiOx-bildenden Materials oder eines Zink oder Nickel bildenden Materials verwendet wird.

4. Beschichtungsverfahren nach einem der Ansprüche 1 bis 3, **dadurch gekennzeichnet, dass** ein Beschichtungsfluid (13) in Form eines Epoxidharzes, insbesondere mit PTFE-Partikeln, gebildet ist.

5. Beschichtungsverfahren nach einem der Ansprüche 1 bis 4, **dadurch gekennzeichnet, dass** zum Homogenisieren ein Drehbewegen, insbesondere Schleudern, mit einer Drehzahl und/oder Drehzeit kontrolliert wird, insbesondere unter Regelung einer möglichst geringen Schichtdicke.

6. Beschichtungsverfahren nach einem der Ansprüche 1 bis 5, **dadurch gekennzeichnet, dass** zum Homogenisieren ein Drehbewegen um, eine Achse oder in Achsrichtung des Bauteiles erfolgt.

7. Beschichtungsverfahren nach einem der Ansprüche 1 bis 6, **dadurch gekennzeichnet, dass** zum Homogenisieren ein Drehbewegen mit einer Umdrehungszahl von 100-300 U/min, insbesondere mit einer Umdrehungszahl von 120-200 U/min erfolgt.

8. Beschichtungsverfahren nach einem der Ansprüche 1 bis 7, **dadurch gekennzeichnet, dass** zum Homogenisieren ein Drehbewegen für einen Zeitraum von 10sec bis 10min, insbesondere 20sec-60sec erfolgt.

9. Beschichtungsverfahren nach einem der Ansprüche 1 bis 8, **dadurch gekennzeichnet, dass** zum Trocknen eine Temperatur auf die Höhe einer Einbrenntemperatur erhöht wird, insbesondere zwischen 150-300°C.

10. Beschichtungsverfahren nach einem der Ansprüche 1 bis 9, **dadurch gekennzeichnet, dass** zum Trockenen eine erhöhte Temperatur für einen Zeitraum von 10min bis 60min, insbesondere von 20min bis 40min aufrecht erhalten wird.

11. Beschichtungsverfahren nach einem der Ansprüche 1 bis 10, **dadurch gekennzeichnet, dass** das Trocknen unter kontrolliertem Bewegen, insbesondere Drehbewegen, des Bauteiles erfolgt.

12. Beschichtungsverfahren nach einem der Ansprüche 1 bis 11, **dadurch gekennzeichnet, dass** zum Trocknen ein Drehbewegen des Bauteiles um eine Achse oder in Achsrichtung des Bauteiles erfolgt.

13. Beschichtungsverfahren nach einem der Ansprüche 1 bis 12, **dadurch gekennzeichnet, dass** zum Trocknen ein Drehbewegen des Bauteils mit einer Umdrehungszahl von 5-100 U/min, insbesondere mit einer Umdrehungszahl von 20-40 U/min erfolgt.

## Claims

1. A coating method for producing a fluid duct of a heat exchanger (1), which comprises at least one inner surface provided for a coating, haying the steps
- Provide the component having the surface
- Coat the surface by directing a flow of a coating fluid (13) which forms the material of the coating and/or contains the maternal of the coating across the surface, thereby forming the coating;
- homogenize the coating by way of controlled movement, in particular rotary movement, of the component ;
- Dry the component at an increased temperature, wherein, to coat the surface, an inner space of the component, in particular a space of the component to be acted upon with operating fluide during operation, is acted upon, wherein a flow direction is reversed for coating in particular.

2. The coating method according to claim 1, **characterized in that**, for coating, a coating fluid (13) is drawn in.

3. The coating method according to one of the claims 1 to 2, **characterized in that** a coating fluid (13) in the form of a resin, varnish, an SiOx-forming material, or a zinc- or nickel-forming material is used.

4. The coating method according to one of the claims 1 to 3, **characterized in that** a coating fluid (13) in the form of an epoxy resin, in particular comprising PTFE particles, is formed.

5. The coating method according two one of the claims 1 to 4, **characterized in that**, for homogenization, a rotary movement, in particular centrifugation, is controlled by way of a rotational speed and/or rotation time, in particular while ensuring that a layer thickness is minimal.

6. The coating method according to one of the claims 1 to 5, **characterized in that**, for homogenization, a rotary movement takes place about an axis or in the axial direction of the component.

7. The coating method according to one of the claims 1 to 6, **characterized in that**, for homogenization, a rotary movement takes place at a speed of 100-300 rpm, in particular at a speed of 120-200 rpm.

8. The coating method according to one of the claims 1 to 7, **characterized in that**, for homogenization, a rotary movement takes place for a period of 10sec to 10min, in particular 20sec-60sec.

9. The coating method according to one of the claims 1 to 8, **characterized in that**, for drying, a temperature is raised to the level of a firing temperature, in particular between 150-300°C.

10. The coating method according to one of the claims 1 to 9, **characterized in that**, for drying, an increased temperature is maintained for a period of 10min to 60min, in particular 20min to 40min.

11. The coating method according to one of the claims 1 to 10, **characterized in that** drying is carried out with controlled movement, in particular rotary movement of the component.

12. The coating method according to one of the claims 1 to 11, **characterized in that**, for drying, a rotary movement of the component takes place about an axis or in the axial direction of the component.

13. The coating method according to one of the claims 1 to 12, **characterized in that**, for drying, a rotary movement takes place at a speed of 5-100 rpm, in particular at a speed of 20-40 rpm.

## Revendications

1. Procédé d'application de revêtement pour la fabrication d'un guidage de fluide d'un échangeur de chaleur (1), guidage de fluide qui présente au moins une surface intérieure qui est prévue pour un revêtement dont l'application présente les étapes consistant :
- à fournir le composant comportant la surface ;
- à revêtir la surface en noyant la surface avec un fluide de revêtement (13) formant le matériau du revêtement et / ou contenant le matériau du revêtement en formant le revêtement ;
- à homogénéiser le revêtement par un mouvement contrôlé du composant, en particulier par un mouvement de rotation de celui-ci ;
- à sécher le composant à une température élevée où, pour revêtir la surface, on injecte dans un espace intérieur du composant, en particulier dans un espace du composant dans lequel un fluide de fonctionnement doit injecté au cours du fonctionnement, où une direction d'écoulement est inversée, en particulier pour l'application du revêtement.

2. Procédé d'application de revêtement selon la revendication 1, **caractérisé en ce qu'**un fluide de revêtement (13) est aspiré pour l'application du revêtement.

3. Procédé d'application de revêtement selon la revendication 1 ou 2, **caractérisé en ce que** l'on utilise un fluide de revêtement (13) se présentant sous la forme d'une résine, d'un vernis, d'un matériau formant du SiOx, ou bien d'un matériau formant du zinc ou du nickel.

4. Procédé d'application de revêtement selon l'une quelconque des revendications 1 à 3, **caractérisé en ce qu'**un fluide de revêtement (13) est formé en se présentant sous la forme d'une résine époxyde, en particulier avec des particules de polytétrafluoroéthylène (PTFE).

5. Procédé d'application de revêtement selon l'une quelconque des revendications 1 à 4, **caractérisé en ce que**, pour l'homogénéisation, un mouvement de rotation, en particulier une centrifugation, est contrôlé suivant une vitesse de rotation et / ou un temps de rotation, en particulier en procédant au réglage d'une épaisseur de couche la plus faible possible.

6. Procédé d'application de revêtement selon l'une quelconque des revendications 1 à 5, **caractérisé en ce que**, pour l'homogénéisation, un mouvement de rotation se produit auteur d'un axe ou dans la direction axiale du composant.

7. Procédé d'application de revêtement selon l'une quelconque des revendications 1 à 6, **caractérisé en ce que**, pour l'homogénéisation, un mouvement de rotation se produit à un nombre de tours compris entre 100 tr/mn et 300 tr/mn, en particulier à un nombre de tours compris entre 120 tr/mn et 200 tr/mn,

8. Procédé d'application de revêtement selon l'une quelconque des revendications 1 à 7, **caractérisé en ce que**, pour l'homogénéisation, un mouvement de rotation se produit pendant un laps de temps allant de 10 s à 10 mn, en particulier de 20 s à 60 s.

9. Procédé d'application de revêtement selon l'une quelconque des revendications 1 à 8, **caractérisé en ce que**, pour le séchage, une température est augmentée à la hauteur d'une température de cuisson, en particulier entre 150°C et 300°C.

10. Procédé d'application de revêtement selon l'une quelconque des revendications 1 à 9, **caractérisé en ce que**, pour le séchage, une température augmentée est maintenue pendant un laps de temps compris entre 10 mn et 60 mn, en particulier entre 20 mn et 40 mn.

11. Procédé d'application de revêtement selon l'une quelconque des revendications 1 à 10, **caractérisé en ce que** le séchage se produit suivant un mouvement contrôlé du composant, en particulier suivant un mouvement de rotation de celui-ci.

12. Procédé d'application de revêtement selon l'une quelconque des revendications 1 à 11, **caractérisé en ce que**, pour le séchage, un mouvement de rotation du composant se produit auteur d'un axe ou dans la direction axiale du composant.

13. Procédé d'application de revêtement selon l'une quelconque des revendications 1 à 12, **caractérisé en ce que**, pour le séchage, le composant est soumis à un mouvement de rotation dont le nombre de tours est compris entre 5 tr/mn et 100 tr/mn, en particulier dont le nombre de tours est compris entre 20 tr/mn et 40 tr/mn.
